# NEUE EUROPÄISCHE PATENTSCHRIFT

(11) **EP 1 236 702 B2**
(45) Veröffentlichungstag und Bekanntmachung des Hinweises auf die Entscheidung über den Einspruch: **10.08.2011**
(45) Hinweis auf die Patenterteilung: 01.10.2003
(21) Anmeldenummer: 01105096.0
(22) Anmeldetag: 02.03.2001
(51) Int. Cl.: C04B 28/26, C04B 18/14, C04B 18/08, C04B 14/06, C04B 18/06, C04B 22/06

(54) **Wasserglasenthaltende Baustoffmischung**
Building material mixture containing waterglass
Mélange pour matériaux de construction contenant du verre soluble

(43) Veröffentlichungstag der Anmeldung: 04.09.2002
(73) Patentinhaber: maxit Deutschland GmbH, 79206 Breisach (DE)
(72) Erfinder: Hesselbarth, Frank, Dr., 45659 Recklinghausen (DE); Gholamhossein, Maleki, 45731 Waltrop (DE)
(74) Vertreter: Rohmann, Michael

(56) Entgegenhaltungen:
- EP-A- 0 457 516
- EP-A1- 0 921 106
- EP-A1- 1 081 114
- EP-A2- 0 512 269
- WO-A-99/67183
- DE-A- 3 133 503
- DE-C- 648 851
- JP-A- 58 140 356
- US-A- 3 826 665
- DATABASE WPI Section Ch, Week 197515 Derwent Publications Ltd., London, GB; Class L02, AN 1975-25372W XP002173162 & SU 408 928 A (OPEN MINING MINERAL EXTR), 18. September 1974 (1974-09-18)
- DATABASE WPI Section Ch, Week 198413 Derwent Publications Ltd., London, GB; Class L02, AN 1984-078701 XP002173163 & JP 59 030748 A (DENKI KAGAKU KOGYO KK), 18. Februar 1984 (1984-02-18)
- DATABASE WPI Section Ch, Week 197705 Derwent Publications Ltd., London, GB; Class L02, AN 1977-08851Y XP002173164 & SU 513 955 A (AGRIC CONS EXPTL), 15. Juli 1976 (1976-07-15)
- DATABASE WPI Section Ch, Week 199648 Derwent Publications Ltd., London, GB; Class L02, AN 1996-483742 XP002173165 & KR 9 501 668 B (LEE C), 28. Februar 1995 (1995-02-28)
- Marketing-Kommunikation der Fa. Chemetall GmbH, Frankfurt: "Lithiumverbindungen in der Bauchemie", Feb. 1994

## Beschreibung

Die Erfindung betrifft eine Baustoffmischung gemäß Anspruch 1 für die Herstellung von chemikalienbeständigen Mörteln. - Die erfindungsgemäße Baustoffmischung besteht aus einer Mehrzahl von Komponenten und wird zweckmäßigerweise mit Wasser angemacht.

Aus EP 0 921 106 A1 ist eine Baustoffmischung der eingangs genannten Art bekannt. Diese bekannte Baustoffmischung enthält eine Alkalisilicat-Bindemittelkomponente sowie eine Pulverkomponente, die eine Mischung aus einer aktivierten Siliziumdioxidkomponente und einer aktivierten Aluminiumoxykomponente ist. Aktivierung meint hier, dass die Aluminiumoxykomponente beispielsweise durch Wärmebehandlung oder Zermahlen in einen reaktionsfähigeren aktivierten Zustand überführt wird. Bei dieser bekannten Baustoffmischung sollen Puzzolane oder latent hydraulische Stoffe durch die aktivierte Aluminiumoxykomponente ersetzt werden. Diese bekannte Baustoffmischung weist den beachtlichen Nachteil auf, dass die daraus gebildeten ausgehärteten Produkte im Hinblick auf ihre chemische Beständigkeit beachtlich zu wünschen übrig lassen. Dies gilt insbesondere für die Beständigkeit dieser Produkte in frischem Zustand gegenüber Wasser und für die Beständigkeit dieser Produkte gegenüber alkalischen Lösungen.

Eine Baustoffmischung der eingangs genannten Art ist außerdem aus US 4 780 142 bekannt. Auch diese Baustoffmischung zeichnet sich durch die vorstehend angegebenen Nachteile aus und ist daher verbesserungsbedürftig.

Der Erfindung liegt das technische Problem zugrunde, eine Baustoffmischung der eingangs genannten Art anzugeben, aus der erhärtete Produkte gebildet werden können, die sich durch eine optimale Beständigkeit und Widerstandsfähigkeit unter den verschiedensten Bedingungen auszeichnen und die insbesondere gegenüber Wasser, alkalischen Lösungen und auch gegenüber Säuren sehr beständig sind.

Zur Lösung dieses technischen Problems lehrt die Erfindung eine Baustoffmischung gemäß Anspruch 1. - Steuerungsmittel meint im Rahmen der Erfindung eine Substanz, mit der die Reaktion zwischen den übrigen Komponenten der Baustoffmischung beim Abbinden, d. h. die Abbindereaktion beeinflusst bzw. gesteuert werden kann.

Die erfindungsgemäße Baustoffmischung wird zweckmäßigerweise mit Wasser als Anmachflüssigkeit angemacht. Grundsätzlich liegt es jedoch auch im Rahmen der Erfindung, eine Anmachflüssigkeit einzusetzen, die zumindest im Wesentlichen Wasser enthält. - Die nachfolgend aufgeführten Gew.-%-Angaben, die sich auf die Zusammensetzung der Baustoffmischung beziehen, meinen die Baustoffmischung vor Zugabe der Anmachflüssigkeit bzw. des Wassers. Dabei liegt es im Rahmen der Erfindung, dass sich die Gew.-%-Angaben aller Komponenten dieser Baustoffmischung jeweils zu 100 Gew.-% addieren.

Erfindungsgemäß wird in der Baustoffmischung Wasserglas als Wasserglaspulver eingesetzt. Erfindungsgemäß sind in der Baustoffmischung 2 bis 20 Gew.-%, vorzugsweise 7 bis 20 Gew.-% Wasserglaspulver vorgesehen. Es liegt im Rahmen der Erfindung, dass die Baustoffmischung mehr als 7 Gew.-% Wasserglaspulver enthält. Bevorzugt sind in der Baustoffmischung bis zu 12 Gew.-% Wasserglaspulver enthalten. Bei dem Wasserglaspulver handelt es sich zweckmäßigerweise um Kaliumwasserglaspulver und/oder Natriumwasserglaspulver. Prinzipiell sind auch Lithiumwassergläser geeignet, jedoch aus ökonomischen Gründen weniger sinnvoll. Bevorzugt wird in der erfindungsgemäßen Baustoffmischung Kaliumwasserglaspulver eingesetzt. Das Modul des Wasserglaspulvers beträgt vorzugsweise 1 bis 4. Modul meint hier das Molverhältnis des Siliziumdioxids zu dem Alkalioxid des Wasserglaspulvers. Für Kaliumwasserglaspulver meint Modul also das Molverhältnis von SiO₂ zu K₂O und Natriumwasserglaspulver meint Modul das Molverhältnis von SiO₂ zu Na₂O. Nach sehr bevorzugter Ausführungsform der Erfindung ist das Modul des Wasserglaspulvers größer als 2, vorzugsweise größer als 3. Erfindungsgemäß enthält die Mischung 20 bis 50 Gew.-%, sehr bevorzugt bis zu 40 Gew.-% des latent hydraulischen Bindemittels. - Erfindungsgemäß ist in der Baustoffmischung als latent hydraulisches Bindemittel zumindest eine Substanz aus der Gruppe "Hüttensand, Flugasche, Trassmehl, Ziegelmehl, Ölschiefer" enthalten. Es liegt auch im Rahmen der Erfindung, dass die Baustoffmischung Elektrofilterasche als latent hydraulisches Bindemittel enthält. Nach einer bevorzugten Ausführungsform der Erfindung ist in der Baustoffmischung zumindest eine Substanz aus der Gruppe "Hüttensand, Elektrofilterasche, Mikrosilika, Trassmehl" als latent hydraulisches Bindemittel enthalten. Mikrosilika wird im Übrigen auch als Silikastaub bezeichnet. Mikrosilika bzw. Silikastaub wird im Rahmen der Erfindung als latent hydraulische Komponente definiert, wenngleich in der Literatur hin und wieder auch eine Zuordnung zu puzzolanischen Stoffen zu finden ist. Nach sehr bevorzugter Ausführungsform, der im Rahmen der Erfindung ganz besondere Bedeutung zukommt, enthält die Baustoffmischung Hüttensand als latent hydraulisches Bindemittel. Dabei kann als latent hydraulisches Bindemittel lediglich Hüttensand eingesetzt werden. Nach einer anderen Ausführungsform der Erfindung wird Hüttensand in Abmischung mit einer oder mit mehreren latent hydraulischen Bindemitteln verwendet. Besonders bewährt als latent hydraulisches Bindemittel hat sich dabei Hüttensand in Abmischung mit Flugasche und/oder mit Trassmehl und/oder mit Mikrosilika. Nach einer bevorzugten Ausführungsform der Erfindung enthält die Baustoffmischung mehr als 10 Gew.-% Hüttensand. Es liegt im Rahmen der Erfindung, als latent hydraulisches Bindemittel Hüttensand ab einer Mahlfeinheit einzusetzen, die einem Blaine-Wert von 3.500 oder mehr entspricht.

Erfindungsgemäß ist in der Baustoffmischung zumindest ein Zement enthalten. Vorzugsweise wird als Zement Portlandzement und/oder Hochofenzement eingesetzt. Dabei können Portlandzemente aller Festigkeitsklassen verwendet werden. Zweckmäßigerweise wird Portlandzement mit einem Blaine-Wert von ca. 4.000 in der Baustoffmischung eingesetzt. Es liegt im Rahmen der Erfindung, dass die Baustoffmischung feingemahlenen Hochofenzement und/oder feinstgemahlenen Hüttensand mit einem Blaine-Wert von 10.000 und mehr enthält. Nach einer Ausführungsform der Erfindung wird in der erfindungsgemäßen Baustoffmischung Portlandzement und/oder Hochofenzement und/oder Feinstzement und/oder feinstgemahlener Hüttensand mit einem Blaine-Wert zwischen 10.000 und 14.000 verwendet. - Erfindungsgemäß sind in der Baustoffmischung 4 bis 15 Gew.-% Zement vorgesehen. Nach einer bevorzugten Ausführungsform der Erfindung enthält die Baustoffmischung 5 bis 10 Gew.-% Zement. Vorzugsweise handelt es sich bei dem Lithiumsalz um zumindest ein Salz aus der Gruppe "Lithiumhydroxid, Lithiumcarbonat, Lithiumsulfat".

Zweckmäßigerweise sind in der Baustoffmischung 0,05 bis 3 Gew.-% Lithiumsalz vorgesehen. Nach einer Ausführungsform enthält die Baustoffmischung 0,05 bis 2 Gew.-%, vorzugsweise 0,05 bis 1 Gew.-% Lithiumsalz. Es liegt im Rahmen der Erfindung, dass die Baustoffmischung 0,1 bis 2 Gew.-%, bevorzugt 0,1 bis 1 Gew.-% Lithiumsalz enthält. Nach einer bevorzugten Ausführungsform der Erfindung sind in der Baustoffmischung 0,1 bis 1 Gew.-% Lithiumhydroxid und/oder 0,1 bis 1 Gew.-% Lithiumsulfat und/oder 0,1 bis 1 Gew.-% Lithiumcarbonat vorgesehen.

Es liegt im Rahmen der Erfindung, dass die erfindungsgemäße Baustoffmischung zumindest einen anorganischen Füllstoff enthält. Zweckmäßigerweise sind in der Baustoffmischung 20 bis 80 Gew.-%, bevorzugt 40 bis 60 Gew.-% des zumindest einen anorganischen Füllstoffs vorgesehen. Vorzugsweise ist als anorganischer Füllstoff zumindest eine Substanz aus der Gruppe "Quarzsand, Schwerspat, Feldspat" in der Baustoffmischung enthalten. Quarzsand meint im Rahmen der Erfindung auch Quarzmehl.

Es liegt im Rahmen der Erfindung, dass in der Baustoffmischung zumindest ein Farbpigment enthalten ist. Damit können farbige Produkte bzw. Mörtel erhalten werden. Es können anorganische Farbpigmente auf Basis von Eisenoxid und/oder Titanoxid eingesetzt werden. Die Baustoffmischung enthält zweckmäßigerweise 1 bis 10 Gew.-%, vorzugsweise 3 bis 5 Gew.-% zumindest eines Farbpigmentes.

Zweckmäßigerweise sind in der Baustoffmischung zusätzliche Steuerungsmittel und/oder Additive enthalten. Dabei liegt es im Rahmen der Erfindung, dass die Baustoffmischung 0,5 bis 10 Gew.-%, vorzugsweise 1 bis 3 Gew.-% an weiteren Steuerungsmitteln und/oder Additiven enthält. Weitere Steuerungsmittel und/oder Additive meint insbesondere Hydrophobierungsmittel, Fließmittel, Entschäumer, Beschleuniger, Wasserretentionsmittel und Thixotropiermittel. Als Fließmittel können beispielsweise Melaminsulfate, Ligninsulfonate, Polycarboxylatether und Polyacrylate verwendet werden. Bevorzugt werden als Fließmittel Polycarboxylatether eingesetzt. Der Baustoffmischung wird zweckmäßigerweise ein pulverförmiger Entschäumer zugesetzt. Als Beschleuniger werden vorzugsweise Säuren, bevorzugt Zitronensäure und/oder Weinsäure sowie Phosphate, beispielsweise Aluminiumphosphate verwendet. Als Wasserretentionsmittel für die erfindungsgemäße Baustoffmischung eignen sich Methylcellulose, Hydroxyethylcellulose oder höherwertige Alkohole wie z. B. Neopentylglykol. Als Thixotropiermittel kann pyrogene Kieselsäure oder Bentonite eingesetzt werden. Es liegt auch im Rahmen der Erfindung, die erfindungsgemäße Baustoffmischung mit Dispersionen auf Basis von Reinacrylat, Styrolacrylat, Vinylacetatethylen, Styrolbutatien und Kombinationen davon, zu vergüten. Die Baustoffmischung kann auch mit entsprechenden redispergierbaren Pulvern vergütet werden. Es liegt im Rahmen der Erfindung, der Baustoffmischung bis zu 25 Gew.-% der Dispersion und/oder des redispergierbaren Pulvers zuzusetzen.

Der Erfindung liegt die Erkenntnis zugrunde, dass mit der erfindungsgemäßen Baustoffmischung im Vergleich zu den aus dem Stand der Technik bekannten Baustoffmischungen beachtliche Vorteile erzielt werden. Nach dem Abbinden der Baustoffmischung werden Produkte erhalten, die sich durch eine optimale Widerstandsfähigkeit gegenüber Wasser, alkalischen Lösungen und sauren Lösungen auszeichnen. Auch gegenüber sehr aggressiven Chemikalien weisen die Produkte eine überraschend hohe Resistenz auf. Der Erfindung liegt insbesondere die Erkenntnis zugrunde, dass sich mit Hilfe der erfindungsgemäß zugesetzten Lithiumsalze die Abbindereaktionen auf einfache Weise gezielt steuern lassen und somit Produkte mit einstellbaren reproduzierbaren Eigenschaften erhalten werden. Von besonderer Bedeutung ist im Rahmen der Erfindung, dass zu der erfindungsgemäßen Baustoffmischung Zemente problemlos zugegeben werden können und nichtsdestoweniger Produkte mit den genannten sehr vorteilhaften Eigenschaften erhalten werden. Bei den aus dem Stand der Technik bekannten Mischungen aus Wasserglas und latent hydraulischen Bindemitteln galt bislang, dass diese Mischungen möglichst zementfrei sein sollten, um Produkte mit zufriedenstellenden reproduzierbaren Eigenschaften zu erhalten. Der Zusatz von Zement führte hier zu unkontrollierten Abbindereaktionen. In der erfindungsgemäßen Baustoffmischung, die vor allem die erfindungsgemäßen Steuerungsmittel aufweist, können dagegen Zemente gezielt zugesetzt werden und es können auf kontrollierte und reproduzierbare Weise Produkte mit den gewünschten Eigenschaften hergestellt werden. Die dabei erhaltenen Produkte sind sowohl überraschend säurestabil als auch überraschend alkalistabil. Die mit der erfindungsgemäßen Baustoffmischung hergestellten Produkte sind sogar gegenüber oxidierenden Säuren, wie beispielsweise Schwefelsäure oder Salpetersäure und auch gegenüber hoch alkalischen Lösungen ausreichend stabil. Dies gilt auch gegenüber Lösemitteln und einer Vielzahl weiterer Chemikalien. Die aus der Baustoffmischung hergestellten Produkte zeigen im Übrigen eine extrem hohe Festigkeit und sind ausreichend widerstandsfähig bezüglich einer Bearbeitung mit Hochdruckreinigern. Weiterhin zeichnen sich die Produkte durch eine sehr hohe Temperaturbeständigkeit aus. Bei Temperaturen bis zu 500° C und mehr treten keinerlei nachteilhafte Beeinträchtigungen auf. Die erfindungsgemäße Baustoffmischung zeichnet sich fernerhin durch eine relativ geringe Hydratationswärme beim Abbinden aus, wodurch sich in vorteilhafter Weise eine geringe Neigung zu Rissbildung und Schwinden ergibt. Die Baustoffmischung eignet sich zur Herstellung von lagerstabilen Werktrockenmörteln. Sie kann auf einfache Weise lediglich mit Wasser angemacht werden und es sind dabei keine besonderen Mischgeräte und kein besonderer Aufwand erforderlich. Die Verarbeitung kann mit der herkömmlichen Applikationstechnik erfolgen. Hervorzuheben ist auch, dass in der Baustoffmischung lediglich physiologisch weitestgehend unbedenkliche Rohstoffe eingesetzt werden.

Die erfindungsgemäße Baustoffmischung kann auf verschiedene Art und Weise eingesetzt werden. So liegt im Rahmen der Erfindung ein Einsatz als Mörtel und Spachtel. Die Applikation kann manuell, maschinell oder mittels Spritz- bzw. Schleuderverfahren erfolgen. - Weiterhin kann die Baustoffmischung auch für Fliesenkleber und/oder Fugenfüller eingesetzt werden. - Fernerhin eignet sich die erfindungsgemäße Baustoffmischung für Industriebodenbeschichtungen oder Estriche in verschiedenen Dicken. Diese aus der erfindungsgemäßen Baustoffmischung hergestellten Beschichtungen zeichnen sich neben ihrer hohen Beständigkeit auch durch günstige Wasserdampfdiffusionswerte aus, so dass keine Gefahr einer osmotischen Blasenbildung bei rückwärtiger Durchfeuchtung besteht. Im Übrigen sind die erfindungsgemäß hergestellten Beschichtungen gegenüber UV-Strahlung resistent und deshalb auch für Einsätze in Außenbereichen optimal geeignet. - Indem der erfindungsgemäßen Baustoffmischung geeignete Dispersionen oder redispergierbare Pulver zugefügt werden, können flexible, insbesondere rissüberbrückende Produkte erhalten werden. Diese Produkte eignen sich insbesondere für Abdichtungen und dergleichen.

Nachfolgend wird die Erfindung anhand eines Ausführungsbeispiels näher erläutert:

Die erfindungsgemäße Baustoffmischung enthält 2 bis 20 Gew.-% Wasserglaspulver, vorzugsweise 7 bis 15 Gew.-%, sehr bevorzugt 7 bis 12 Gew.-% Wasserglaspulver. Als Wasserglaspulver wird dabei bevorzugt Kaliumwasserglaspulver eingesetzt. In der Baustoffmischung sind weiterhin 20 bis 50 Gew.-%, vorzugsweise 30 bis 40 Gew.-% des zumindest einen latent hydraulischen Bindemittels enthalten. Die erfindungsgemäße Baustoffmischung weist bevorzugt über 10 Gew.-% Hüttensand als latent hydraulische Komponente auf. Nach einer Ausführungsform der Erfindung wird Hüttensand in Kombination mit zumindest einem weiteren latent hydraulischen Bindemittel in der Baustoffmischung eingesetzt. In der Baustoffmischung sind fernerhin 4 bis 15 Gew.-%, sehr bevorzugt 5 bis 10 Gew.-% zumindest eines Zementes vorgesehen. Als Zement kann Portlandzement und/oder Hochofenzement eingesetzt werden. Die erfindungsgemäße Baustoffmischung enthält weiterhin vorzugsweise 0,05 bis 5 Gew.-%, bevorzugt 0,1 bis 3 Gew.-% des zumindest einen Lithiumsalzes als Steuerungsmittel. Nach sehr bevorzugter Ausführungsform der Erfindung handelt es sich bei dem Alkalisalz um zumindest ein Salz aus der Gruppe "Lithiumhydroxid, Lithiumcarbonat, Lithiumsulfat". Nach einer Ausführungsform der Erfindung, sind in der Baustoffmischung 0,1 bis 1 Gew.-%, vorzugsweise 0,4 bis 0,6 Gew.-% Lithiumhydroxid und/oder 0,1 bis 1 Gew.-%, vorzugsweise 0,4 bis 0,6 Gew.-% Lithiumsulfat enthalten. Es liegt im Rahmen der Erfindung, dass die Baustoffmischung weitere (oben bereits erläuterte) Additive und/oder Steuerungsmittel enthalten kann.

## Patentansprüche

1. Baustoffmischung für die Herstellung von chemikallenbeständigen Mörteln, wobei die Baustoffmischung 2 bis 20 Gew.-% Wasserglaspulver enthält,
wobei fernerhin 20 bis 50 Gew.-% zumindest eines latent hydraulischen Bindemittels aus der Gruppe "Hüttensand, Flugasche, Trassmehl, Ziegelmehl, Ölschiefer" enthalten sind,
wobei weiterhin 4 bis 15 Gew.-% zumindest eines Zementes enthalten sind, und wobei die Baustoffmischung 0,05 bis 10 Ges.-% zumindest eines Lithiumsalzes aus der Gruppe "Lithiumhydroxid, Lithiumoxid, kohlenstoffhaltiges Lithiumsalz, schwefelhaftiges Lithiumsalz, stickstoffhaltiges Lithiumsalz, phosphorhaltiges Lithiumsalz, halogenhaltiges Lithiumsalz" als Steuerungsmittel aufweist.

2. Baustoffmlschung nach Anspruch 1, wobei 7 bis 20 Gew.-% Wasserglaspulver in der Mischung enthalten sind.

3. Baustoffmischung nach einem der Ansprüche 1 oder 2, wobei als zusätzliches latent hydraulisches Bindemittel auch Mikrositika in der Mischung enthalten ist.

4. Baustoffmischung nach einem der Ansprüche 1 bis 3, wobei das Lithiumsalz ein Salz aus der Gruppe "Lithiumhydroxid, Lithiumcarbonat, Lithiumsulfat" ist.

5. Baustoffmischung nach einem der Ansprüche 1 bis 4, wobei 0,05 bis 3 Ges.-% Lithiumsalz vorgesehen sind.

## Claims

1. A building material mixture for the production of chemical-resistant mortars, wherein the building material mixture contains 2 to 20 % by weight of water glass powder,
wherein the mixture further contains to 20 to 50% by weight of at least one latent hydraulic binder from the group comprising "foundry sand, fly ash, trass powder, brick dust and oil shale",
wherein in addition the building material mixture contains at least 4 to 15% by weight of cement,
and wherein the building material mixture comprises, as a control agent, 0.05 to 10 % by weight of at least one lithium salt from the group comprising "a lithium hydroxide, a lithium oxide, a lithium salt which contains carbon, a lithium salt which contains sulphur, a lithium salt which contains nitrogen, a lithium salt which contains phosphorus, and a lithium salt which contains a halogen.

2. A building material mixture according to claim 1, wherein the mixture contains 7 to 20 % by weight of water glass powder.

3. A building material mixture according to any one of claims 1 to 2, wherein the mixture also contains micronized silica as an additional latent hydraulic binder.

4. A building material mixture according to any one of claims 1 to 3, wherein the lithium salt is a salt from the group "lithium hydroxide, lithium carbonate, lithium sulphate.

5. A building material mixture according to any one of claims 1 to 4, wherein 0.05 to 3 % by weight of lithium salt is provided.

## Revendications

1. Mélange pour matériaux de construction servant à confectionner des mortiers résistants aux produits chimiques, **caractérisé en ce que** le mélange pour matériaux de construction contient entre 2 et 20 % pondéraux de poudre de verre soluble,
**en ce qu'**en outre ce mélange contient entre 20 et 50 % pondéraux d'un liant hydraulique latent choisi dans le groupe « sable métallurgique, cendres volantes, farine de trass, farine de briques, schiste bitumineux »,
**en ce qu'**il contient par ailleurs entre 4 et 15 % pondéraux d'au moins un ciment,
et **en ce que** le mélange pour matériaux de construction présente entre 0,05 et 10 % pondéraux d'au moins un sel de lithium choisi dans le groupe « hydroxyde de lithium, oxyde de lithium, sel de lithium carboné, sel de lithium soufré, sel de lithium azoté, sel de lithium phosphoré, sel de lithium halogéné » comme officiant d'agent de régulation.

2. Mélange pour matériaux de construction selon la revendication 1, **caractérisé en ce que** le mélange contient entre 7 et 20 % pondéraux de poudre de verre soluble.

3. Mélange pour matériaux de construction selon l'une des revendications 1 ou 2, **caractérisé en ce que** le mélange contient aussi de la microsilice officiant de liant hydraulique latent supplémentaire.

4. Mélange pour matériaux de construction selon l'une des revendications 1 à 3, **caractérisé en ce que** le sel de lithium est un sel choisi dans le groupe « hydroxyde de lithium, carbonate de lithium, sulfate de lithium ».

5. Mélange pour matériaux de construction selon l'une des revendications 1 à 4, **caractérisé en ce que** sont prévus entre 0,05 et 3 % pondéraux de sel de lithium.
